Europäisches Patentamt

European Patent Office

Office européen des brevets

(11) Numéro de publication: **0 434 885 A1**

## (12) DEMANDE DE BREVET EUROPEEN

(21) Numéro de dépôt: 89810992.1

(22) Date de dépôt: 29.12.89

(51) Int. Cl.⁵: **H02K 37/14**

(43) Date de publication de la demande:
**03.07.91 Bulletin 91/27**

(84) Etats contractants désignés:
**CH DE FR GB IT LI**

(71) Demandeur: **DETRA SA**
**35, Rue Scholl**
**CH-2504 Bienne(CH)**

(72) Inventeur: **Tu, Mai Xuan**

Chiésaz 13
**CH-1024 Ecublens(CH)**
Inventeur: **Schwab, Michel**
**Rue du Cornouiller 4**
**CH-2502 Bienne(CH)**

(74) Mandataire: **Rochat, Daniel Jean et al**
**Bovard SA Ingénieurs-Conseils ACP**
**Optingenstrasse 16**
**CH-3000 Bern 25(CH)**

(54) **Module d'affichage analogique.**

(57) Module d'affichage analogique destiné à fournir une information sous forme d'une déviation d'aiguille en fonction d'une grandeur électrique appliquée à l'entrée du module.

Ce module est constitué par un moteur polyphasé à aimant permanent dont l'axe porte directement l'aiguille d'affichage. Un circuit électronique de commande est placé dans le même boîtier que le moteur pour former un ensemble modulaire.

Figure 1

## MODULE D'AFFICHAGE ANALOGIQUE :

La présente invention a pour objet un module d'affichage analogique destiné à fournir une information sous forme d'une déviation d'aiguille en fonction d'une grandeur électrique appliquée à l'entrée de ce module.

De nombreux types d'affichages analogiques sont connus, comme par exemple les affichages à cadre mobile utilisés dans les instruments de mesure ou l'affichage analogique de l'heure d'une montre à quartz. Les affichages à cadre mobile ont comme inconvénients une constante de temps mécanique importante et un angle de rotation limité; de plus, la présence d'un ressort de rappel dans ce type d'affichage pose certains problèmes de tenue mécanique lorsque l'instrument de mesure est placé dans un milieu soumis à des fortes vibrations. Dans les montres à quartz à affichage analogique, les aiguilles indiquant l'heure sont entraînées par un moteur pas à pas à travers un train d'engrenage. Si ce mode d'affichage convient bien pour un instrument de mesure du temps, il présente certains inconvénients pour d'autres instruments de mesure. En effet, dans une montre à quartz, la vitesse moyenne de l'aiguille de seconde est relativement faible, en l'occurrence un tour toutes les 60 secondes. De plus, l'information fournie par cette aiguille est du type incrémental, c'est-à-dire la position de l'aiguille de seconde à un instant donné est référée à celle que cette aiguille avait une seconde avant plus un pas. Dans certains instruments de mesure comme par exemple le compte-tours, la vitesse moyenne de l'aiguille d'affichage peut atteindre plusieurs tours par seconde; compte tenu des rapports de transmission, la vitesse moyenne de la roue d'entraînement au niveau du moteur est beaucoup plus élevée, provoquant ainsi des usures inacceptables. De plus, ces instruments ne fonctionnent pas en permanence, comme dans le cas d'une montre, ce qui nécessite un repérage de la position initiale de l'aiguille d'affichage avant chaque utilisation puisque l'affichage par le moteur pas à pas est du type incrémental.

La présente invention permet de remédier aux inconvénients précités grâce aux moyens revendiqués.

L'invention sera mieux comprise à la lecture de la description qui va suivre en se référant au dessin annexé dans lequel:

- la figure 1 représente le module d'affichage selon l'invention;
- la figure 2 représente le moteur synchrone à aimant permanent utilisé dans le module d'affichage;
- la figure 3 représente le schéma bloc du circuit électronique de commande de ce moteur.

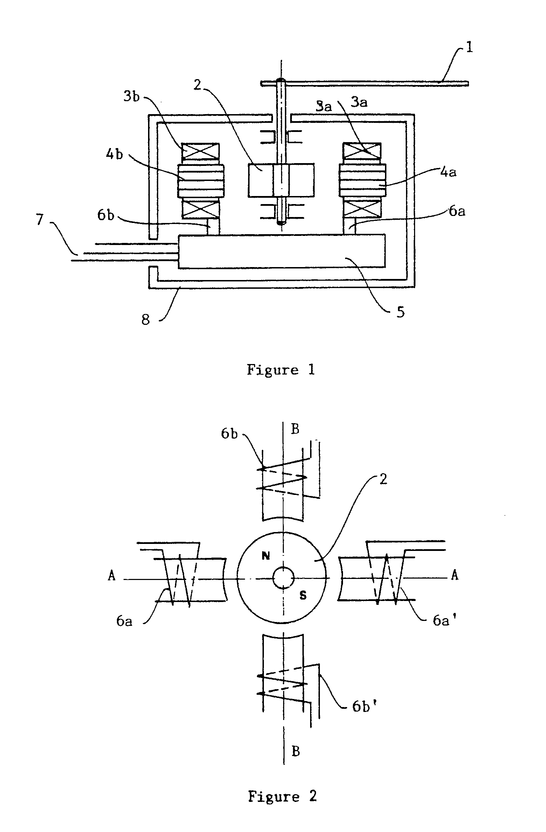

La figure 1 représente un exemple d'exécution du module d'affichage selon l'invention. L'aiguille d'affichage 1 est montée directement sur l'axe du rotor 2 du moteur. Les enroulements 3a et 3b sont bobinés sur les pièces polaires statoriques 4a et 4b et reliés électriquement au circuit électronique de commande 5 grâce aux connexions 6a et 6b. Le circuit électronique 5 reçoit la tension d'alimentation ainsi que l'information à afficher grâce au connecteur 7. L'ensemble: moteur, circuit électronique de commande, connecteur, est monté dans un boîtier 8 pour former un module d'affichage analogique.

La figure 2 représente un exemple d'exécution du moteur utilisé dans le module d'affichage. Ce moteur comporte deux phases dont les axes magnétiques sont représentés par A-A et B-B. Chaque phase est constituée par la mise en série de deux enroulements $6a$, $6a'$ respectivement $6b$, $6b'$. Le rotor 2 du moteur est constitué par un aimant permanent bipolaire. En injectant un courant dans la phase constituée par les enroulements $6a$, $6a'$, l'axe magnétique du rotor s'aligne sur l'axe A-A. De même, en injectant un courant dans la phase constituée par les enroulements $6b$, $6b'$ tout en supprimant le courant dans l'autre phase, l'axe magnétique du rotor s'alignera sur l'axe B-B. On peut imposer au rotor des positions intermé diaires en injectant simultanément dans les deux phases des courants indépendants $i_a$ et $i_b$. Chaque position du rotor correspond à une paire de valeurs des courants $i_a$ et $i_b$. On constate que ce mode d'affichage fournit la position absolue du rotor, contrairement à l'affichage à l'aide d'un moteur pas à pas qui donne une position incrémentale; de plus, le train d'engrenage est supprimé dans ce mode d'affichage. Le but visé par l'invention est donc atteint par les moyens mis en oeuvre.

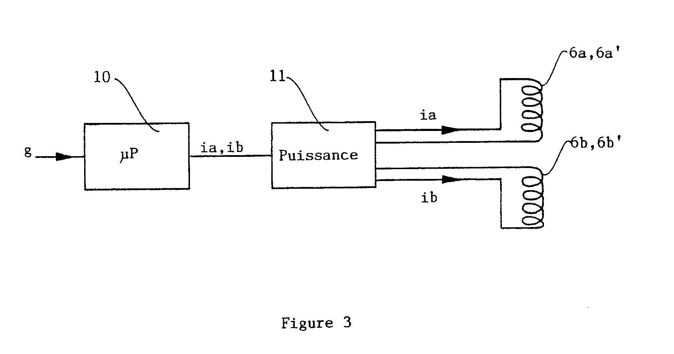

La figure 3 représente le schéma bloc du circuit électronique de commande. Le microprocesseur 10 calcule la paire de valeurs $i_a$, $i_b$ en fonction de la valeur à afficher g. Cette paire de valeurs est transmise à l'étage de puissance 11 qui fournit aux enroulements $6a$, $6a'$ respectivement $6b$, $6b'$ des courants correspondants.

## Revendications

1. Module d'affichage analogique comprenant un moteur polyphasé rotatif dont le rotor est constitué par un aimant permanent bipolaire, un circuit électronique de commande de ce moteur caractérisé en ce que l'axe du rotor dudit moteur porte directement l'aiguille d'affichage et en ce que ledit circuit électronique de commande et le moteur forment un ensemble modulaire placé dans le même boîtier.

Figure 1

Figure 2

Figure 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CH-B-626772 (CASIOCOMPUTER CO.)<br>* page 3, colonne de droite, ligne 55 - page 4, colonne de gauche, ligne 58 * | 1 | H02K37/14 |
| Y | US-A-3260871 (E.R. LANG)<br>* colonne 3, lignes 11 - 20 * | 1 | |

DOMAINES TECHNIQUES RECHERCHES (Int. Cl.5)

G01D
H02K

Le présent rapport a été établi pour toutes les revendications

| Lieu de la recherche | Date d'achèvement de la recherche | Examinateur |
|---|---|---|
| LA HAYE | 14 AOUT 1990 | LUT K. |